# EUROPÄISCHE PATENTSCHRIFT

(11) **EP 2 060 596 B1**
(45) Veröffentlichungstag und Bekanntmachung des Hinweises auf die Patenterteilung: **13.06.2012**
(21) Anmeldenummer: 07022307.8
(22) Anmeldetag: 16.11.2007
(51) Int. Cl.: C08J 5/00, C08J 5/08, C08K 3/00, C08K 3/40, C08K 7/00, C08K 7/14

(54) **Gefüllte Polyamidformmassen**
Filled polyamide moulding compositions
Compositions de moulage renforcées à base de polyamide chargé

(43) Veröffentlichungstag der Anmeldung: 20.05.2009
(73) Patentinhaber: EMS-PATENT AG, 7013 Domat/Ems (CH)
(72) Erfinder: Harder, Dr.rer.nat. Philipp, 7000 Chur (CH); Lamberts, Dipl.-Chem., Nikolai, 7402 Bonaduz (CH)
(74) Vertreter: Pfenning, Meinig & Partner GbR

(56) Entgegenhaltungen:
- EP-A- 0 246 620
- EP-A- 1 010 726
- WO-A-2007/080754
- WO-A-2007/106074
- JP-A- 10 219 026
- US-A1- 2005 250 885
- US-A1- 2006 058 431

## Beschreibung

Die Erfindung betrifft gefüllte Polyamidformmassen, die neben einer ausgewählten Polymermischung aus Polyamiden und einem Flammschutzmittel Glasfasern mit nicht kreisförmiger Querschnittsfläche enthalten. Die vorliegende Erfindung betrifft weiterhin die Verwendung derartiger Formmassen zur Herstellung von Formkörpern und die Formkörper selbst.

Polyamide sind heutzutage weit verbreitet als Strukturelemente für den Innen- und Außenbereich, was im Wesentlichen auf die hervorragenden mechanischen Eigenschaften zurückzuführen ist.

Eine Verbesserung der mechanischen Eigenschaften, wie Festigkeit und Steifheit, lässt sich insbesondere durch den Zusatz von faserförmigen Verstärkungsstoffen, z.B. Glasfasern, erreichen.

So beschreibt die EP 0 246 620 B1 einen glasfaserverstärkten thermoplastischen Kunststoff, wobei hier Glasfasern mit einem rechteckigen, elliptischen oder hüllenförmigen Querschnitt in geschnittener Form verwendet werden.

In der EP 0 376 616 B1 wird eine thermoplastische Polymerzusammensetzung offenbart, bei der eine faserartige Verstärkung enthalten ist, wobei diese einen nichtkreisförmigen Querschnitt aufweist und eine gekrümmte oder halbrunde Kontur besitzt.

Letztlich offenbart die DE 103 46 326 A1 flammgeschützte Polyamidformmassen und deren Verwendung, wobei hier als Verstärkungsmaterialien Glasfasern in rundem Querschnitt in Form endloser Stränge (Rovings) oder in geschnittener Form (Glasfasern) eingearbeitet sind.

Es hat sich allerdings gezeigt, dass die bisher im Stand der Technik bekannten glasfaserverstärkten Kunststoffe, auch Polyamidformmassen die Glasfasern enthalten, noch nicht in allen Punkten befriedigende Ergebnisse liefern. So ist es wünschenswert, mit Glasfasern verstärkte Polyamidformmassen und hieraus herstellbare Formteile zur Verfügung zu stellen, die einen geringen Verzug, hohe Quersteifigkeit und Festigkeit sowie eine ausgezeichnete Oberflächenqualität bei gleichzeitig hohem Füllgrad mit den Verstärkungsfasern erreichen. Die PA-Formmasse muss auch gleichzeitig noch gut zu verarbeiten sein, d.h. sie sollte eine hohe Fließfähigkeit besitzen und auch gute Flammschutzeigenschaften aufweisen. Insbesondere besteht ein großes Bedürfnis nach Formkörpern aus Polyamidformmassen mit Glasfasern, die in Bezug auf die Wärmeformbeständigkeit überlegene Eigenschaften zum Stand der Technik aufweisen.

Aufgabe der vorliegenden Erfindung ist es deshalb, Polyamidformmassen anzugeben, die zu Formkörpern verarbeitet werden können, wobei die Formkörper möglichst gleichzeitig ausgezeichnete Eigenschaften betreffend den Verzug, die Kerbschlagzähigkeit, die Quersteifigkeit und Festigkeit sowie die Oberflächenqualität und die Wärmeformbeständigkeit (HDT C) aufweisen sollen. Die Formkörper sollen weiterhin einen guten Brandschutz aufweisen.

Diese Aufgabe wird in Bezug auf die Formmasse durch die Merkmale des Patentanspruches 1, betreffend den Formkörper durch die Merkmale des Patentanspruches 17 gelöst. Die Unteransprüche zeigen vorteilhafte Weiterbildungen auf.

Die erfindungsgemäß vorgeschlagene gefüllte Polyamidformmasse zeichnet sich nach dem unabhängigen Patentanspruch 1 dadurch aus, dass sie eine eine Polyamidmatrix bildende Polymermischung aufweist, die aus spezifischen Edukten gebildet worden ist.

Die Polymermischung (A) umfasst danach 55 bis 100 Gew.-%, bevorzugt 55 bis 90 Gew.-%, insbesondere 60 bis 85 Gew.-% mindestens eines aliphatischen Polyamides (A1), das ausgewählt ist aus der Gruppe PA6, PA46, PA66, PA610, PA612, PA6/12, PA1010, PA11, PA12, PA1012, PA1212 und/oder Mischungen und/oder Copolyamide hiervon. Bevorzugt sind dabei PA6 und PA66.

Weiterhin kann die Polymermischung als zweiten Bestandteil bis zu 45 Gew.-% mindestens eines Polyamides (A2), das ausgewählt ist aus MACM10-18, MACMI, MACMT, MXDI, MXD6, MXD6/MXDI, PACM10-18, 6I, 6T, 6T/66, 6I/6T sowie Mischungen und/oder Copolyamiden hiervon enthalten. Bevorzugt ist in der Polymermischung das Polyamid (A2) mit 10 - 45 Gew.-%, besonders bevorzugt mit 15 - 40 Gew.-% enthalten

Wesentlich bei der vorgeschlagenen gefüllten Polyamidformmasse ist nun, dass in der Polyamidmatrix, die aus 25 bis 72 Gew.-% der vorstehend beschriebenen Polymermischung besteht, 20 bis 65 Gew.-% einer Glasfaser mit nicht-kreisförmiger Querschnittsfläche und einem Abmessungsverhältnis von der Hauptquerschnittsachse zur Nebenquerschnittsachse von 2 bis 8 enthalten ist.

Unter den erfindungsgemäß eingesetzten Glasfasern (B) werden Glasfasern mit flacher Gestalt und einer nichtkreisförmigen Querschnittsfläche verstanden, wobei diese bevorzugt in Form von endlosen Strängen (Rovings) eingesetzt werden. Das Abmessungsverhältnis der Hauptquerschnittsachse zur Nebenquerschnittsachse beträgt dabei bevorzugt zwischen 3,5 und 6,0 besonders bevorzugt zwischen 3,5 und 5,0. Dabei ist die Querschnittsfläche bevorzugt länglich oval, elliptisch oder nahezu rechteckig. Die Glasfaser selbst kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind. Die Glasfasern für sich gesehen können auch mit einer Amino- oder Epoxysilanbeschichtung versehen sein.

Die erfindungsgemäßen Glasfasern (B) mit nicht-kreisförmiger Querschnittsfläche werden entweder als Kurzglasfaser (Schnittglas mit einer Länge von 0.2 bis 20 mm, bevorzugt 2 - 12 mm) oder als Langglasfaser (Endlosfasern oder Rovings) eingesetzt.

Ein weiteres kennzeichnendes Merkmal der eingesetzten Glasfasern besteht darin, dass die Länge der Hauptquerschnittsachse bevorzugt im Bereich von 6 bis 40 µm, insbesondere im Bereich von 17 bis 30 µm und die Länge der Nebenquerschnittsachse im Bereich von 3 bis 20 µm, insbesondere im Bereich von 4 bis 10 µm liegt.

Aus stofflicher Sicht betreffend die Zusammensetzung der die Polyamidmatrix bildenden Polymermischung umfasst die Erfindung grundsätzlich alle der unter den Merkmalen (A1) genannten aliphatischen Polyamide, gegebenenfalls auch in Kombination mit den unter (A2) genannten Polyamiden. Die aliphatischen Polyamide (A1) besitzen dabei bevorzugt eine Lösungsviskosität ηᵣₑₗ, gemessen in m-Kresol (0,5 Gew.-%, 20°C) im Bereich von 1.3 bis 2,3, bevorzugt im Bereich von 1.35 2,0, insbesondere im Bereich von 1.40 bis 1,90. Die Herstellung dieser aliphatischen Polyamide erfolgt, wie aus dem Stand der Technik bekannt, durch Polykondensation bzw. Polymerisation der entsprechenden Lactame und/oder Aminocarbonsäuren und/oder Diamine und Disäuren.

Bei den Polyamiden A2 sind die Copolyamide 6I/6T sowie MACM12 und MXD6/MXDI bevorzugt. Hinsichtlich der Copolyamide 6I/6T sind zwei verschiedene Zusammensetzungsbereiche besonders bevorzugt. Zum einen sind dies die amorphen Copolyamide mit einem Anteil von weniger als 50 Mol-% 6T-Einheiten, wobei ein Zusammensetzungsbereich 6T:6I von 20:80 bis 45:55 bevorzugt wird, und zum anderen sind dies die hochschmelzenden Copolymamide mit einem 6T-Anteil von größer als 50 mol-%, wobei ein Zusammensetzungsbereich 6T:6I von 55:45 bis 80:20, insbesondere von 70:30 bevorzugt wird. Im Hinblick auf die Copolyamide MXD6/MXDI werden MXD6 reiche Zusammensetzungen bevorzugt, insbesondere mit einem MXD6-Gehalt von größer als 80 mol-%.

Bezüglich der Polymermischung (A) werden folgende Zusammensetzungen bevorzugt:
(A1): PA 66
(A2): PA 6I/6T, wobei das Mol-Verhältnis im Bereich von 65:35 bis 75:25 liegt oder insbesondere 67:33 beträgt.

(A1): PA 610 und/oder PA1010, wobei im Falle einer Mischung die Komponenten im Verhältnis von 1:1 bis 4:1 eingesetzt werden.
(A2): PA 6I/6T, wobei das Mol-Verhältnis im Bereich von 65:35 bis 75:25 liegt oder insbesondere 67:33 beträgt.

(A1): Mischung aus PA 6 und PA66, im Verhältnis von 1:2 bis 1:4, insbesondere von 1:4
(A2): PA 6I/6T, wobei das Mol-Verhältnis im Bereich von 65:35 bis 75:25 liegt oder insbesondere 67:33 beträgt.

(A1): PA 66
(A2): PA 6I/6T, wobei das Mol-Verhältnis im Bereich von 40:60 bis 25:75 liegt oder insbesondere 30:70 beträgt.

(A1): PA 66
(A2): PA 6T/66, wobei das Mol-Verhältnis im Bereich von 50:50 bis 70:30 liegt oder insbesondere 55:45 beträgt.

(A1): PA 66
(A2): PA MXD6/MXDI, wobei das Mol-Verhältnis im Bereich von 70:30 bis 90:10 liegt oder insbesondere 88:12 beträgt.

(A1): PA 12
(A2): PA MACM12.

(A1): PA 12
(A2): PA MACMI/12, wobei der Gehalt an Laurinlactam im Bereich von 15 bis 45 mol-%, bevorzugt kleiner als 40 mol-%, insbesondere kleiner 35 mol-% ist.

Wobei die Komponente (A1) jeweils bevorzugt im Bereich von 60 bis 80 Gew.-%, insbesondere von 65 bis 75 Gew.-% und Komponente (A2) bevorzugt im Bereich von 20 bis 40 Gew.-%, insbesondere im Bereich von 25 bis 35 Gew.-% eingesetzt wird.

In einer besonderen Ausführungsform werden folgende Zusammensetzungen für die Polymermischung (Polyamidmatrix) bevorzugt:
(A1): 70-100 Gew.-% PA 1010 oder PA 1012 oder PA 11 oder PA 12
(A2): 0-30 Gew.-% PA MACM12 oder PA MACMI/12 oder PA PACM12/MACM12,

(A1): 70-100 Gew.-% Mischung aus PA 6 und PA66, im Verhältnis von 1:2 bis 1:4, insbesondere von 1:4
(A2): 0-30 Gew.-% PA 6I/6T, wobei das Mol-Verhältnis im Bereich von 65:35 bis 75:25 liegt oder insbesondere 67:33 beträgt,
wobei insbesondere bevorzugt wird, wenn die Polymermatrix ausschließlich durch Komponente (A1) gebildet wird.

In einer weiteren bevorzugten Ausführungsform hat die Komponente (A2) einen höheren Schmelzpunktals (A1), wobei der Schmelzpunkt von (A2) größer als 270°C, insbesondere größer als 290°C ist.

In einer weiteren Ausführungsform ist die Komponente amorph und weist eine Glasübergangstemperatur von größer 90°C, bevorzugt größer 110°C und besonders bevorzugt größer 140°C auf.

Die Polyamide (A2) besitzen dabei bevorzugt eine Lösungsviskosität ηᵣₑₗ, gemessen in m-Kresol (0,5 Gew.-%, 20°C) im Bereich von 1.3 bis 2,0, bevorzugt im Bereich von 1.35 bis 1,9, insbesondere im Bereich von 1.40 bis 1,85.

Die Herstellung der Polyamide (A2) erfolgt, wie ebenfalls aus dem Stand der Technik bekannt, durch Umsetzung von im Wesentlichen molaren Mengen der entsprechenden Diamine und Dicarbonsäuren und allfälligem Zusatz an Lactamen und/oder Aminocarbonsäuren.

Die erfindungsgemäße Formmasse enthält weiterhin noch 8 - 25 Gew.-%, bevorzugt 10 - 22 Gew.-% und insbesondere 12 - 20 Gew.-% eines Flammschutzmittels (C). Das Flammschutzmittel (Komponente (C)) umfasst dabei 60 - 100 Gew.-%, bevorzugt 70 - 98 Gew.-%, insbesondere 80 - 96 Gew.-% eines Phosphinsäuresalzes und/oder Diphosphinsäuresalzes (Komponente (C1)) sowie 0 - 40 Gew.-%, bevorzugt 2 - 30 Gew.-%, insbesondere 4 - 20 Gew.-% eines Melaminpolyphosphats (Komponente (C2)). Derartige Flammschutzmittel sind aus dem Stand der Technik bekannt. Hierzu wird auf die DE 103 46 3261 verwiesen.

Bevorzugt wird als Komponente (C1) ein Phosphinsäuresalz der allgemeinen Formel I und/oder Formel (II) und/oder deren Polymere 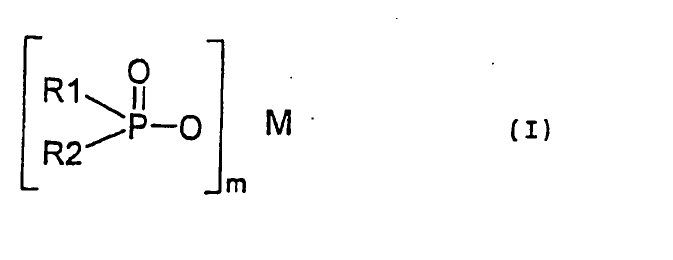 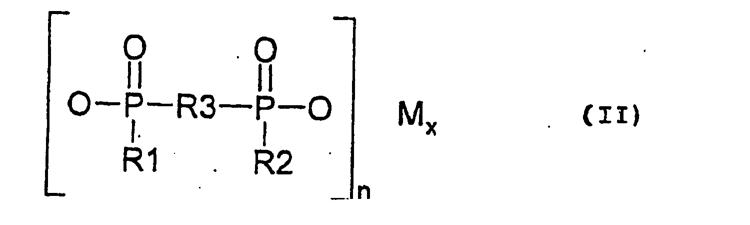 worin
R¹, R² gleich oder verschieden sind und C₁-C₈-Alkyl, linear oder verzweigt und/oder Aryl,
R₃C₁-C₁₀-Rlkylen, linear oder verzweigt, C₆-C₁₀-Arylen, - Alkylarylen oder Arylalkylen;
M Metallion aus der 2. oder 3. Haupt- oder Nebengruppe des Periodensystems,
m2 oder 3;
n1 oder 3;
x1 oder 2
bedeuten.

Als Metallion werden bevorzugt Al, Ca und Zn verwendet.

Die die Polyamidmatrix bildende Polymermischung kann weiterhin noch wie aus dem Stand der Technik schon bekannt, teilchen- und/oder schichtförmige Füllstoffe enthalten. Diese teilchen- und/oder schichtförmigen Füllstoffe (D) können mit einem Anteil bis zu 20 Gewichtsprozent in der Polymermischung vorhanden sein. Eine bevorzugte Menge der Füllstoffe beträgt 0,1 bis 15 Gew.-%.

Als Beispiele für derartige Füllstoffe, die in Teilchen- und/oder Schichtform vorliegen können, seien Whiskers, Talkum, Glimmer, Silicate, Quarz, Titandioxid, Wollastonit, Kaolin, Kieselsäuren, Magnesiumkarbonat, Magnesiumhydroxid, Kreide gemahlen oder gefälltes Kalziumkarbonat, Kalk, Feldspat, Bariumsulfat, permanentmagnetische oder magnetisierbare Metalle oder Legierungen, Glaskugeln, Hohlglaskugeln, hohlkuglige Silikatfüllstoffe, natürliche Schichtsilikate, synthetische Schichtsilikate und Mischung hiervon genannt.

Als bevorzugte weitere Verstärkungsstoffe seien beispielhaft Kohlenstofffasern (Carbonfasern, Graphitfasern), Borfasern, Aramid- (p- oder m-Aramidfasern (z.B. Kevlar^{®} oder Nomex^{®}, DuPont) oder deren Gemische) und Basaltfasern genannt, wobei die genannten Verstärkungsfasern als Kurz- oder Langfasern, auch in Form einer Mischung von verschiedenen Fasern eingesetzt werden können. In einer weiteren alternativen erfindungsgemäßen Ausführungsform können die erfindungsgemäß eingesetzten Glasfasern im Gemisch mit Kohlenstofffasern (Carbonfasern, Graphitfasern) vorliegen. Durch Austausch eines Teils der Glasfasern durch Kohlenstofffasern entsteht somit ein hybridfaserverstärkter Compound, dessen Steifigkeit im Vergleich zu reinen Glasfasern erhöht ist. Das Gemisch aus Glas- und Kohlenstofffasern kann ein Gewichtsverhältnis von Glasfaser/ Kohlenstofffasern von 70/ 30 bis 97/3, insbesondere von 80/20 bis 95/5 aufweisen.

Bevorzugtermaßen enthalten die erfindungsgemäßen Formmassen im wesentlichen nur die Komponente (B) als Verstärkungsfaser, insbesondere ausschließlich die Komponente (B) als Verstärkungsfaser. Die Komponente (B) macht gemäß einer weiteren bevorzugten Ausführungsform im Bereich von 30-60 Gewichtsprozent, insbesondere 35-55 Gewichtsprozent, bevorzugt von wenigstens 40 Gewichtsprozent der Polyamidformmasse aus, wobei dieser Anteil bevorzugtermaßen zur Hauptsache oder sogar ausschließlich durch Glasfasern mit nicht-kreisförmigem Querschnitt gebildet wird.

In der Polymermischung, die die Polyamidmatrix bildet, können weiterhin noch Additive D in einer Menge bis zu 5 Gew.-%, bevorzugt in einer Menge von 0,1 bis 5 Gew.-% enthalten sein. Übliche Additive sind beispielsweise Wärmeschutzmittel, Antioxidanzien, Lichtschutzmittel, Gleitmittel, Entformungsmittel, Nukleierungsmittel, Pigmente, Farbstoffe und Antidrippingmittel sowie Mischungen hiervon.

Es hat sich in Versuchen gezeigt, dass insbesondere eine Polyamidformmasse, die die folgenden Komponenten enthält, überlegene Eigenschaften aufweist:
A: 25 - 72 Gew.-% der Polyamidmatrix,
B: 20 - 65 Gew.-% Glasfasern,
C: 8 - 20 Gew.-% Flammschutzmittel,
D: 0,1 - 15 Gew.-% Füllstoff, und
E: 0,1 - 5 Gew.-% Additive,
wobei die Summe dieser Komponenten 100 Gew.-% beträgt.

Überraschenderweise wurde gefunden, dass, wenn die gefüllten Polyamidformmassen nach der Erfindung zu Formkörpern verarbeitet werden, Formkörper erhalten werden, die überdurchschnittliche Eigenschaften, insbesondere in Bezug auf die Kerbschlagzähigkeit, die Festigkeit und Steifigkeit, insbesondere quer zur Hauptfaserrichtung, sowie der Wärmeformbeständigkeit (HDT C) aufweisen.

Besonders hervorzuheben bei der erfindungsgemäßen Formmasse und den daraus hergestellten Formkörpern ist, dass die Wärmedurchbiegungstemperatur unter Last nach ASTM D 648 (HDT-C) um mindestens 10°C größer ist als die der vergleichbaren Polyamidformmassen mit Glasfaser mit rundem Querschnitt als Füllung. Es hat sich sogar gezeigt, dass die Wärmedurchbiegungstemperatur bei den vergleichbaren Polyamidformmassen um bis zu 20°C größer ist.

Bei den erfindungsgemäßen PA-Formassen bzw. bei den daraus hergestellten Formkörpern ist weiterhin hervorzuheben, dass in Kombination zu den vorstehend beschriebenen ausgezeichneten Eigenschaften nach ein herausragender Flammschutz erreicht wird. Die Formmasse ist nach UL-Klassifizierung VO bei 0,8 mm dicken Probenkörper.

Besonders hervorzuheben bei der erfindungsgemäßen Formmasse und den daraus hergestellten Formkörpern ist, dass die Kerbschlagzähigkeit bei 23°C im Mittel um 80 bis 100% höher ist als die der vergleichbaren Polyamidformmasse mit runden Glasfasern (d.h. Glasfasern mit einer kreisförmigen Querschnittsfläche) als Verstärkung.

Überraschenderweise konnte bei den erfindungsgemäßen Formmassen und den daraus hergestellten Formkörpern festgestellt werden, dass die Quersteifigkeit und Querfestigkeit gegenüber vergleichbaren Polyamidformmassen mit runden Glasfasern deutlich verbessert werden konnten. Bei den erfindungsgemäßen Formmassen und den daraus hergestellten Formkörpern beträgt die Quersteifigkeit (gemessen quer zur Spritzrichtung) mindestens 55%, bevorzugt mindestens 58% der gemessenen Längssteifigkeit. Bei vergleichbaren Polyamidformmassen mit runden Glasfasern beträgt die Quersteifigkeit bestenfalls 52% in Bezug zur Längssteifigkeit.

Darüber hinaus zeichnen sich die erfindungsgemäßen Formmassen durch eine sehr gute Verarbeitbarkeit und Fließfähigkeit aus. Hierzu tragen zum einen die geeignet ausgewählten Matrixkomponenten (A1) und (A2) sowie die spezielle Geometrie der Glasfasern (B) gleichermaßen bei.

Die Erfindung wird nachfolgend anhand der folgenden Beispiele näher erläutert.

In den Beispielen und Vergleichsbeispielen wurden nachfolgend genannte Materialien verwendet:
- PA Typ A:: Polyamid-66 mit ηᵣₑₗ = 1,82, RADICI, Ita- lien
- PA Typ B:: Polyamid-6 mit ηᵣₑₗ = 1,86) EMS-CHEMIE AG, Schweiz
- PA Typ C:: Polyamid 6I/6T (67:33) mit ηᵣₑₗ = 1,57, EMS-CHEMIE AG, Schweiz
- PA Typ D:: Polyamid 6I/6T (30:70) mit ηᵣₑₗ = 1,52, EMS-CHEMIE AG, Schweiz
- PA Typ E:: Polyamid MACM12 mit ηᵣₑₗ = 1,75, EMS- CHEMIE AG, Schweiz
- PA Typ F:: Polyamid MXD6/MXDI (88:12) mit ηᵣₑₗ = 1,62, EMS-CHEMIE AG, Schweiz

- Glasfasern Typ A:: NITTOBO CSG3PA-820, 3 mm lang, 28 µm breit, 7 µm dick, Aspektverhält- nis der Querschnittsachsen = 4, A- minosilanschlichte, NITTO BOSEKI, Japan (flache Glasfasern, erfin- dungsgemäß)
- Glasfasern Typ B:: CS 7928, 4,5 mm lang, 10 µm Durch- messer, BAYER AG, Deutschland (Glasfasern mit kreisförmigem Quer- schnitt, Stand der Technik)
- Melapur^{®} 200/70:: ein Melaminpolyphosphat (Ciba Spez. GmbH), Flammschutzmittel, CAS-Nr: 218768-84-4
- Exolit^{®}GP1230:: ein phosphororganisches Salz (Cla- riant Produkte GmbH), Flammschutz- mittel.

Die Formmassen der Zusammensetzungen in Tabelle 1 werden auf einen Zweiwellenextruder der Fa. Werner u. Pfleiderer Typ ZSK 30 hergestellt. Die Granulate der Polyamid-Typen A bis E sowie die Flammschutzmittel werden in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 290°C eingestellt. Bei 150 bis 200 upm wurden 10 kg Durchsatz erreicht. Die Granulierung erfolgte mittels einer Unterwassergranulierung bzw. Heißabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 110°C für 24h wurden die Granulateigenschaften gemessen und die Prüfkörper hergestellt.

Die Prüfkörper wurden auf einer Arburg Spritzgießanlage hergestellt, wobei die Zylindertemperaturen von 260°C bis 300°C und eine Scheckenumfangsgeschwindigkeit von 15 m/min eingestellt wurden. Die Formtemperatur wurde mit 100 - 140°C gewählt.

Die Messungen wurden nach folgenden Normen und an folgenden Prüfkörpern durchgeführt.

Zug-E-Modul:
ISO 527 mit einer Zuggeschwindigkeit von 1 mm/min ISO-Zugstab , Norm: ISO/CD 3167, Typ A1, 170 × 20/10 × 4 mm, Temperatur 23 °C Die Quersteifigkeit wurde an einem BIAX-Probekörper (BIAX, publiziert in Noss'Ovra Personalzeitschrift, Dezember 2006, Nr. 12, 29. Jahrgang, EMS-CHEMIE AG) bestimmt, der die richtungsabhängige Messung der Steifigkeit und Festigkeit erlaubt.

Reißfestigkeit und Reißdehnung:
ISO 527 mit einer Zuggeschwindigkeit von 5 mm/min ISO-Zugstab , Norm: ISO/CD 3167, Typ A1, 170 × 20/10 × 4 mm, Temperatur 23 °C Die Querfestigkeit wurde an einem BIAX-Probekörper (BIAX, publiziert in Noss'Ovra Personalzeitschrift, Dezember 2006, Nr. 12, 29. Jahrgang, EMS-CHEMIE AG) bestimmt, der die richtungsabhängige Messung der Steifigkeit und Festigkeit erlaubt.

Schlagzähigkeit nach Charpy:
ISO 179/*eU
ISO-Prüfstab, Norm: ISO/CD 3167, Typ B1, 80 × 10 × 4 mm, Temperatur 23 °C
* 1 = nicht instrumentiert, 2 = instrumentiert

Kerbschlagzähigkeit nach Charpy:
ISO 179/*eA
ISO-Prüfstab, Norm: ISO/CD 3167, Typ B1, 80 × 10 × 4 mm, Temperatur 23 °C
* 1 = nicht instrumentiert, 2 = instrumentiert

Glasumwandlungstemperatur (Tg), Schmelzenthalpie (ΔH)
ISO-Norm 11357-1/-2
Granulat

Die Differential Scanning Calorimetry (DSC) wurde mit Aufheizrate von 20 °C/min durchgeführt.

Relative Viskosität:
DIN EN ISO 307, in 0,5 Gew.-%-iger m-Kresollösung,
Temperatur 20°C

MVR: (Melt volume rate)
nach ISO 1133 bei 275°C und einer Belastung von 21,6 kg

Fließlänge:
Die Fließlängen wurden mittels einer Arburg-Spritzgussmaschine (Typ: ARBURG - ALLROUNDER 320-210-750) bestimmt. Es wurden Fließspiralen der Dimension 1,5mm × 10 mm bei einer Massetemperatur von 290°C und einer Formtemperatur von 100°C angefertigt.

Wenn in der Tabelle nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

**Tabelle 1: Zusammensetzung und Eigenschaften der Beispiele 1 - 3 und der Vergleichsbeispiele VB1 - VB3**

| **Beispiel** | | **1** | **VB1** | **2** | **VB2** | **3** | **VB3** |
|---|---|---|---|---|---|---|---|
| **Zusammensetzung** | | | | | | | |
| PA Typ A | Gew.-% | 23,8 | 23,8 | 28.3 | 28.3 | 24.8 | 24.8 |
| PA Typ B | Gew.-% | | | 7.1 | 7.1 | | |
| PA Typ C | Gew.-% | 8.2 | 8.2 | | | | |
| PA-Typ D | Gew.-% | | | | | 8.4 | 8.4 |
| Exolit^{®} OP 1230 | Gew.-% | 14,0 | 14,0 | 14.2 | 14.2 | 14.0 | 14.0 |
| Melapur^{®} 200/70 | Gew.-% | 2,0 | 2,0 | | | 2.0 | 2.0 |
| Alugel 34-TH (Aluminiumtristearat) | Gew.-% | 0,5 | 0,5 | 0.2 | 0.2 | 0.5 | 0.5 |
| Stabilisierung/Pigment | Gew.-% | 1,5 | 1,5 | 0.2 | 0.2 | 0.3 | 0.3 |
| Glasfasern Typ A | Gew.-% | 50.0 | | 50.0 | | 50.0 | |
| Glasfasern Typ B | Gew.-% | | 50.0 | | 50.0 | | 50.0 |

| **Eigenschaften** | | | | | | | |
|---|---|---|---|---|---|---|---|
| MVR (275°C/21,6kg) | cm³/ 10min | 360 | 140 | 320 | 110 | 350 | 180 |
| HDT C | °C | 198 | 165 | 201 | 167 | 196 | 165 |
| Zug-E-Modul längs | MPa | 19500 | 18750 | 19700 | 18850 | 19550 | 18800 |
| Zug-E-Modul quer | MPa | 11300 | 9750 | 11400 | 9680 | 11570 | 9800 |
| Reißfestigkeit längs | MPa | 192 | 175 | 198 | 177 | 193 | 175 |
| Reißfestigkeit quer | MPa | 100 | 86 | 103 | 88 | 98 | 85 |
| Reißdehnung | % | 1.5 | 1.4 | 1.4 | 1.3 | 1.5 | 1.4 |
| Kerbschlagzähigkeit, Charpy, 23°C | kJ/m² | 14 | 7 | 13 | 7 | 15 | 6 |
| Fließlänge | mm | 320 | 210 | 300 | 190 | 330 | 180 |
| (290°C/100°C) | | | | | | | |
| Brandklassifizierung UL-94 (Dicke der Probenkörper: 0,8 mm) | - | VO | VO | VO | VO | VO | VO |
| Verarbeitbarkeit | - | + | o | + | o | + | o |
| "+": gut; | | | | | | | |
| "o": schlecht | | | | | | | |

Die aus den Formmassen der Beispiele 1 - 3 hergestellten Probekörper weisen stets höhere Steifigkeiten und Festigkeiten auf als die entsprechenden Vergleichsbeispiele. Dies gilt insbesondere auch für die quer zur Hauptfaserrichtung gemessenen Moduli und Reißfestigkeiten.

Auch hinsichtlich der Wärmeformbeständigkeit zeigen die erfindungsgemäßen Formmassen eine hervorragende Leistungsfähigkeit. Der HDT C der Vergleichsbeispiele wird von den Beispielen 1 - 3 um mehr als 30°C übertroffen.

Die Formmassen der Vergleichsbeispiele VB1 - VB3 sind kritisch in der Verarbeitung, d.h. die Spritzgussverarbeitung ist schwierig, kaum reproduzierbar, bedarf hoher bis sehr hoher Fülldrucke und die hergestellten Formkörper weisen teilweise Einfall- und/oder Fehlstellen auf und sind schwer entformbar. Dagegen lassen sich die erfindungsgemäßen Formmassen recht gut verarbeiten, selbst bei kleinen Wanddicken. Entformungsprobleme traten bei den Beispielen 1 - 3 nicht auf. Der erforderliche Fülldruck war bei den erfindungsgemäßen Beispielen bis zu 40% tiefer als bei den Vergleichsbeispielen. Darüber hinaus weisen die Formkörper hergestellt aus den erfindungsgemäßen Formmassen deutlich glattere Oberflächen auf.

Damit im Einklang steht das wesentlich bessere Fließverhalten der Formmassen mit den flachen Glasfasern (nicht-kreisförmige Querschnittsfläche), welche im Vergleich zu den herkömmlichen glasfaserverstärkten Formmassen (runde Glasfasern) eine im Mittel um 30 - 40% höhere Fließlänge aufweisen.

## Patentansprüche

1. Gefüllte Polyamid (PA)-Formmassen aus
A) 25 - 72 Gew.-% einer eine Polyamidmatrix bildenden Polymermischung enthaltend
A1) 55 bis 85 Gew.-% mindestens eines aliphatischen Polyamids ausgewählt aus der Gruppe PA6, PA46, PA66, PA610, PA612, PA6/12, PA1010, PA11, PA12, PA1012, PA1212 und/oder Mischungen und/oder Copolyamide hiervon,
und/oder Copolyamide mit
A2) 0 bis 45 Gew.-% mindestens eines Polyamids ausgewählt aus MACM10-18, MACMI, MACMT, MXDI, MXD6, MXD6/MXDI, PACM10-18, 6I, 6T, 6I/6T, 6T/66 und/oder Mischungen und/oder Copolyamiden hiervon,
B) 20 bis 65 Gew.-% einer Glasfaser mit nicht-kreisförmiger Querschnittsfläche und einem Abmessungsverhältnis von der Hauptquerschnittsachse zur Nebenquerschnittsachse von 2 bis 8, sowie
C) 8 - 25 Gew.-% Flammschutzmittel enthaltend
C1) 60 - 100 Gew.-% eines Phosphinsäuresalzes und/oder eines Diphosphinsäuresalzes,
C2) 0 - 40 Gew.-% eines Melaminpolyphosphats.

2. PA-Formmasse nach Anspruch 1, **dadurch gekennzeichnet, dass** das Abmessungsverhältnis der Hauptquerschnittsachse zur Nebenquerschnittsachse zwischen 3,5 und 6,0 liegt.

3. PA-Formmasse nach Anspruch 1 oder 2, **dadurch gekennzeichnet, dass** die Glasfaser ausgewählt ist aus der Gruppe aus E-Glasfasern, A-Glasfasern, C-Glasfasern, D-Glasfasern, M-Glasfasern, S-Glasfasern und/oder R-Glasfasern.

4. PA-Formmasse nach mindestens einem der Ansprüche 1 bis 3, **dadurch gekennzeichnet, dass** bei den Glasfasern die Länge der Hauptquerschnittsachse 6 bis 40 µm und die Länge der Nebenquerschnittsachse 3 bis 20 µm beträgt.

5. PA-Formmasse nach mindestens einem der Ansprüche 1 bis 4, **dadurch gekennzeichnet, dass** die Glasfaser (B) in Form von Schnittglas mit einer Faserlänge von 0.2 - 20 mm, insbesondere mit einer Faserlänge von 2 - 12 mm vorliegt.

6. PA-Formmasse nach mindestens einem der Ansprüche 1 bis 5, **dadurch gekennzeichnet, dass** die Glasfaser (B) in Form von endlosen Glasfasern (Rovings) vorliegt.

7. PA-Formmasse nach einem der Ansprüche 1 bis 6,
**dadurch gekennzeichnet, dass** die Wärmedurchbiegungstemperatur unter Last nach ASTM D 648 (HDT-C) um mindestens 10°C größer ist als die HDT-C einer vergleichbaren gefüllten Formmasse in Bezug auf die PA-Matrix, die mit Glasfaser mit rundem Ausschnitt in vergleichbare Mengenverhältnisse gefüllt ist.

8. PA-Formmasse nach Anspruch 7, **dadurch gekennzeichnet, dass** die HDT-C um 20°C größer ist.

9. PA-Formmasse nach mindestens einem der Ansprüche 1 bis 8, **dadurch gekennzeichnet, dass** in der Polymermischung A 55 bis 85 Gew.-% des Polyamids A1 und/oder Copolyamide mit 10 bis 45 Gew.-% des Polyamids A2 enthalten sind.

10. PA-Formmasse nach mindestens einem der Ansprüche 1 bis 9, **dadurch gekennzeichnet, dass** die Polyamide A2 ausgewählt sind, aus 6T/6I, MXD6/MXDI, MACM12, PACM12/MACM12, 6I, 6T/66, 6I/6T.

11. PA-Formmasse nach mindestens einem der Ansprüche 1 bis 10, **dadurch gekennzeichnet, dass** bis zu 20 Gew.-% Teilchen und/oder schichtförmige Füllstoffe D enthalten sind.

12. PA-Formmasse nach Anspruch 11, **dadurch gekennzeichnet, dass** 0,1 bis 15 Gew.-% Teilchen und/oder schichtförmige Füllstoffe D enthalten sind.

13. PA-Formmasse nach mindestens einem der Ansprüche 1 bis 12, **dadurch gekennzeichnet, dass** bis zu 5 Gew.-% Additive E enthalten sind.

14. PA-Formmasse nach Anspruch 13, **dadurch gekennzeichnet, dass** 0,1 bis 5 Gew.-% Additive E enthalten sind.

15. PA-Formmasse nach einem der Ansprüche 1 bis 14, **dadurch gekennzeichnet, dass** folgende Komponenten enthalten sind:
A: 25-72 Gew.-% der Polyamidmatrix,
B: 20-65 Gew.-% Glasfasern,
C: 8-20 Gew.-% Flammschutzmittel,
D: 0,1-15 Gew.-% Füllstoff und
E: 0,1-5 Gew.-% Additiv, mit der Maßgabe, dass A+B+C+D+E 100 Gew.-% beträgt.

16. Verwendung der Formmasse nach mindestens einem der Ansprüche 1 bis 15 zur Herstellung von Formkörpern.

17. Formkörper erhältlich aus einer Polyamidformmasse nach mindestens einem der Ansprüche 1 bis 15.

18. Formkörper nach Anspruch 17, **dadurch gekennzeichnet, dass** er mittels Spritzguss, Extrusion, Pultrusion, Spritzblasen oder anderen Verformungstechniken hergestellt worden ist.

## Claims

1. Filled polyamide (PA) moulding compounds made of
A) 25 - 72% by weight of a polymer mixture forming a polyamide matrix containing
A1) 55 to 90% by weight of an aliphatic polyamide selected from the group PA6, PA46, PA66, PA610, PA612, PA6/12, PA1010, PA11, PA12, PA1012, PA1212 and/or mixtures and/or copolyamides hereof,
and
A2) 10 to 45% by weight of at least one polyamide selected from MACM10-18, MACMI, MACMT, MXDI, MXD6, MXDX/ MXDI, PACM10-18, 6I, 6T 6I/6T, 6T/66 and/or mixtures and/or copolyamides hereof,
B) 20 to 65% by weight of a glass fibre with a non-circular cross-sectional area and a dimensional ratio of the main cross-sectional axis to the subsidiary cross-sectional axis of 2 to 8, and also
C) 8 - 25% by weight of a flameproofing agent containing
C1) 60 - 100% by weight of a phosphinic acid salt and/or a diphosphinic acid salt,
C2) 0 - 40% by weight of a melamine polyphosphate.

2. PA moulding compound according to claim 1, **characterised in that** the dimensional ratio of the main cross-sectional axis to the subsidiary cross-sectional axis is between 3.5 and 6.0.

3. PA moulding compound according to claim 1 or 2, **characterised in that** the glass fibre is selected from the group comprising E-glass fibres, A-glass fibres, C-glass fibres, D-glass fibres, M-glass fibres, S-glass fibres and/or R-glass fibres.

4. PA moulding compound according to at least one of the claims 1 to 3, **characterised in that**, in the case of the glass fibres, the length of the main cross-sectional axis is 6 to 40 µm and the length of the subsidiary cross-sectional axis is 3 to 20 µm.

5. PA moulding compound according to at least one of the claims 1 to 4, **characterised in that** the glass fibre (B) is present in the form of cut glass with a fibre length of 0.2 - 20 mm, in particular with a fibre length of 2 - 12 mm.

6. PA moulding compound according to at least one of the claims 1 to 5, **characterised in that** the glass fibre (B) is present in the form of endless glass fibres (rovings).

7. PA moulding compound according to one of the claims 1 to 6, **characterised in that** the heat deflection temperature under load according to ASTM D 648 (HDT-C) is greater by at least 10°C than the HDT-C of a comparable filled moulding compound with respect to the PA matrix which is filled with glass fibre with a round section in comparable quantity ratios.

8. PA moulding compound according to claim 7, **characterised in that** the HDT-C is greater by 20°C.

9. PA moulding compound according to at least one of the claims 1 to 8, **characterised in that**, in the polymer mixture A, 55 to 85% by weight of the polyamide A1 and/or copolyamides with 10 to 45% by weight of the polyamide A2 are contained.

10. PA moulding compound according to at least one of the claims 1 to 9, **characterised in that** the polyamides A2 are selected from 6T/6I, MXD6/ MXDI, MACM12, PACM12/MACM12, 6I, 6T/66, 6I/6T.

11. PA moulding compound according to at least one of the claims 1 to 10, **characterised in that** up to 20% by weight of particle- and/or layer-shaped fillers D are contained.

12. PA moulding compound according to claim 11, **characterised in that** 0.1 to 15% by weight of particle- and/or layer-shaped fillers D are contained.

13. PA moulding compound according to at least one of the claims 1 to 12, **characterised in that** up to 5% by weight of additives E are contained.

14. PA moulding compound according to claim 13, **characterised in that** 0.1 to 5% by weight of additives E are contained.

15. PA moulding compound according to one of the claims 1 to 14, **characterised in that** the following components are contained:
A: 25 to 72% by weight of the polyamide matrix,
B: 20 - 65% by weight of glass fibres,
C: 8 - 20% by weight of flameproofing agent,
D: 0.1 - 15% by weight of filler and
E: 0.1 - 5% by weight of additive,
with the proviso that A+B+C+D+E is 100% by weight.

16. Use of the moulding compound according to at least one of the claims 1 to 15 for the production of moulded articles.

17. Moulded article obtainable from a polyamide moulding compound according to one of the claims 1 to 15.

18. Moulded article according to claim 17, **characterised in that** it has been produced by means of injection moulding, extrusion, pultrusion, blow moulding or other moulding techniques.

## Revendications

1. Masses de moulage de polyamide (PA) chargées, constituées de :
A) 25 à 72 % en poids d'un mélange polymère formant une matrice de polyamide, contenant :
A1) 55 à 85 % en poids d'au moins un polyamide aliphatique choisi dans le groupe constitué de PA6, PA46, PA66, PA610, PA612, PA6/12, PA1010, PA11, PA12, PA1012, PA1212 et/ou des mélanges et/ou des copolyamides de ceux-ci, et/ou des copolyamides avec
A2) 0 à 45 % en poids d'au moins un polyamide choisi parmi MACM10-18, MACMI, MACMT, MXDI, MXD6, MXD6/MXDI, PACM10-18, 61, 6T, 6I/6T, 6T/66 et/ou des mélanges et/ou des copolyamides de ceux-ci,
B) 20 à 65 % en poids d'une fibre de verre avec une surface de section transversale non circulaire et un rapport de dimension de l'axe de section transversale principal à l'axe de section transversale secondaire de 2 à 8, ainsi que
C) 8 à 25 % en poids d'un agent ignifuge, contenant :
C1) 60 à 100 % en poids d'un sel acide de phosphine et/ou d'un sel acide de diphosphine,
C2) 0 à 40 % en poids d'un polyphosphate de mélamine.

2. Masse de moulage de PA selon la revendication 1, **caractérisée en ce que** le rapport de dimension de l'axe de section transversale principal à l'axe de section transversal secondaire se situe entre 3,5 et 6,0.

3. Masse de moulage de PA selon la revendication 1 ou 2, **caractérisée en ce que** la fibre de verre est choisie dans le groupe constitué de fibres de verre E, de fibres de verre A, de fibres de verre C, de fibres de verre D, de fibres de verre M, de fibres de verre S et/ou de fibres de verre R.

4. Masse de moulage de PA selon au moins l'une quelconque des revendications 1 à 3, **caractérisée en ce que** dans le cas des fibres de verre, la longueur de l'axe de section transversale principal est de 6 à 40 µm, tandis que la longueur de l'axe de section transversale secondaire est de 3 à 20 µm.

5. Masse de moulage de PA selon au moins l'une quelconque des revendications 1 à 4, **caractérisée en ce que** la fibre de verre (B) se présente sous la forme de verre coupé avec une longueur de fibre de 0,2 à 20 mm, en particulier avec une longueur de fibre de 2 à 12 mm.

6. Masse de moulage selon au moins l'une quelconque des revendications 1 à 5, **caractérisée en ce que** la fibre de verre (B) se présente sous la forme de filaments de verre (stratifils).

7. Masse de moulage de PA selon l'une quelconque des revendications 1 à 6, **caractérisée en ce que** la température de distorsion à la chaleur sous une charge selon la norme ASTM D 648 (HDT-C) est supérieure d'au moins 10 °C à la HDT-C d'une masse de moulage chargée comparable en ce qui concerne la matrice de PA, qui est chargée d'une fibre de verre avec une section ronde dans des rapports quantitatifs comparables.

8. Masse de moulage de PA selon la revendication 7, **caractérisée en ce que** la HDT-C est supérieure d'environ 20 °C.

9. Masse de moulage de PA selon au moins l'une quelconque des revendications 1 à 8, **caractérisée en ce que** le mélange polymère A contient 55 à 85 % en poids du polyamide A1 et/ou de copolyamides ayant 10 à 45 % en poids du polyamide A2.

10. Masse de moulage de PA selon au moins l'une quelconque des revendications 1 à 9, **caractérisée en ce que** les polyamides A2 sont choisis parmi 6T/6I, MXD6/MXDI, MACM12, PACM12/MACM12, 61, 6T/66, 6I/6T.

11. Masse de moulage de PA selon au moins l'une quelconque des revendications 1 à 10, **caractérisée en ce que** sont contenues jusqu'à 20 % en poids de particules et/ou de charges stratifiées D.

12. Masse de moulage de PA selon la revendication 11, **caractérisée en ce que** sont contenues de 0,1 à 15 % en poids de particules et/ou de charges stratifiées D.

13. Masse de moulage de PA selon au moins l'une quelconque des revendications 1 à 12, **caractérisée en ce que** sont contenus jusqu'à 5 % en poids d'additifs E.

14. Masse de moulage de PA selon la revendication 13, **caractérisée en ce que** sont contenus de 0,1 à 5 % en poids d'additifs E.

15. Masse de moulage de PA selon l'une quelconque des revendications 1 à 14, **caractérisée en ce que** sont contenus les composants suivants :
A : 25 à 72 % en poids de la matrice de polyamide,
B : 20 à 65 % en poids de fibres de verre,
C : 8 à 20 % en poids d'un agent ignifuge,
D : 0,1 à 15 % en poids d'une charge, et
E : 0,1 à 5 % en poids d'un additif,
à la condition que la somme A+B+C+D+E soit égale à 100 % en poids.

16. Utilisation de la masse de moulage selon au moins l'une quelconque des revendications 1 à 15 pour la fabrication de corps de moulage.

17. Corps de moulage pouvant être obtenu à partir d'une masse de moulage de polyamide selon au moins l'une quelconque des revendications 1 à 15.

18. Corps de moulage selon la revendication 17, **caractérisé en ce qu'**il a été fabriqué au moyen d'un moulage par injection, d'une extrusion, d'une extrusion par étirage, d'un moulage par injection-soufflage ou d'autres techniques de formage.
